# EUROPEAN PATENT APPLICATION

(11) **EP 4 595 783 A2**
(43) Date of publication of application: **06.08.2025**
(21) Application number: 25183042.8
(22) Date of filing: 27.04.2022
(51) Int. Cl.: A24D 1/02

(54) **AEROSOL GENERATING ARTICLE AND AEROSOL GENERATING DEVICE**

(30) Priority: 29.04.2021 KR 20210055945
(62) Divisional of application: 22796125.7
(71) Applicant: KT&G Corporation, Daedeok-gu Daejeon 34337 (KR)
(72) Inventor: JANG, Seok Su, 34337 Daejeon (KR); HAN, Dae Nam, 06344 Seoul (KR); KIM, Dong Sung, 06310 Seoul (KR); KIM, Yong Hwan, 13970 Anyang-si (KR); LEE, Seung Won, 14293 Gwangmyeong-si (KR)
(74) Representative: Ter Meer Steinmeister & Partner

(57) **Abstract**

One or more embodiments relate to an aerosol generating article including: a first portion including an aerosol generating element; a second portion including a cooling element; a third portion including a tobacco element; and a fourth portion including a filter element, wherein the first through fourth portions are sequentially arranged in a longitudinal direction of the aerosol generating article.

## Description

### Technical Field

Embodiments relate to an aerosol generating article and an aerosol generating device.

### Background Art

Recently, the demand for substitutes for traditional cigarettes has increased. For example, there is increasing demand for a device for generating an aerosol by heating an aerosol generating material in an aerosol generating article (e.g., cigarette) without combustion.

### Disclosure of Invention

### Technical Problem

The objective to be achieved by one or more embodiments is to provide an aerosol generating article and an aerosol generating device for providing uniform aerosol and nicotine during the entire smoking time.

The problems to be solved by one or more embodiments are not limited to those described above, and other objectives that are not described may be clearly understood by one of ordinary skill in the art from the present specification and the accompanying drawings.

### Solution to Problem

As a technical means for achieving the technical problem described above, one or more embodiments provide an aerosol generating article including: a first portion including an aerosol generating element; a second portion including a cooling element; a third portion including a tobacco element; and a fourth portion including a filter element, wherein the first through fourth portions are sequentially arranged in a longitudinal direction of the aerosol generating article.

One or more embodiments provide an aerosol generating device including: an accommodation space for accommodating the aerosol generating article according to one or more embodiments; a heater heating the aerosol generating article; and a battery supplying power to the heater.

The means for solving the problems is not limited thereto and may include all configurations which may be derived throughout the specification by one of ordinary skill in the art.

### Advantageous Effects of Invention

An aerosol generating article and an aerosol generating device according to one or more embodiments may provide uniform aerosol and nicotine during the entire smoking time by arranging a cooling element between an aerosol generating element and a tobacco element.

The effects of the embodiments are not limited thereto and may include all effects which may be derived from the configurations described below.

### Brief Description of Drawings

FIG. 1 is a schematic view of a structure of an aerosol generating article according to an embodiment.
FIG. 2 is a graph showing the amount of inhaled nicotine per each puff as smoking progresses using aerosol generating articles according to an embodiment and comparative examples.
FIG. 3 is a view illustrating elements of an aerosol generating device according to an embodiment.
FIG. 4 is a block diagram of components of an aerosol generating device according to an embodiment.
FIG. 5 is a diagram showing the aerosol generating device illustrated in FIG. 3, into which the aerosol generating article illustrated in FIG. 1 is inserted.

### Best Mode for Carrying out the Invention

According to one or more embodiments, an aerosol generating article includes: a first portion including an aerosol generating element; a second portion including a cooling element; a third portion including a tobacco element; and a fourth portion including a filter element, wherein the first through fourth portions are sequentially arranged in a longitudinal direction of the aerosol generating article.

The first portion may include a crimped sheet, and the aerosol generating element may be impregnated in the crimped sheet.

The second portion may have a length of about 3 mm to about 30 mm in the longitudinal direction of the aerosol generating article.

The second portion may include a tubular-shaped structure including a cavity.

The second portion may include polylactic acid.

The fourth portion may include at least one capsule including a flavor material and/or an aerosol generating material.

The fourth portion may include fibers impregnated with a flavor material.

The aerosol generating article may further include a thermally conductive wrapper surrounding at least a portion of the first portion, and the thermally conductive wrapper may include a paramagnetic material.

The aerosol generating article may further include a wrapper surrounding at least a portion of the second portion and including at least one perforation formed at a location corresponding to the second portion.

The aerosol generating article may further include a wrapper surrounding at least a portion of the fourth portion and including at least one perforation formed at a location corresponding to the fourth portion.

According to one or more embodiments, an aerosol generating device includes: an accommodation space for accommodating the aerosol generating article according to one or more embodiments; a heater heating the aerosol generating article; and a battery supplying power to the heater.

The heater may surround the accommodation space and heat at least a portion of the first portion.

### Mode for the Invention

With respect to the terms used to describe in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

Also, the terms used in this specification that include ordinal numbers such as "first," "second," etc. may be used to describe various components, but the components shall not be limited by those terms. The terms may be used for distinguishing one component from another component.

Throughout the specification, an "aerosol generating article" refers to an article used for smoking. For example, an aerosol generating article may refer to a general combustion type cigarette that is ignited and combusted or a heating type cigarette that is heated without combustion by an aerosol generating device. As another example, the aerosol generating article may refer to a cartridge containing a liquid that generates an aerosol when heated.

Throughout the specification, a "longitudinal direction of the aerosol generating article" denotes a direction in which a length of the aerosol generating article extends or a direction in which the aerosol generating article is inserted into an aerosol generating device.

Throughout the specification, a "tobacco element" denotes an element including a tobacco material.

Throughout the specification, a "tobacco material" denotes all types of materials including a component originated from a tobacco leaf.

Throughout the specification, a "cooling element" denotes an element for cooling a material. For example, the cooling element may cool aerosol generated from the aerosol generating element or the tobacco element.

Throughout the specification, a "filter element" denotes an element including a filtering material. For example, the filter element may include a plurality of fiber strands.

Hereinafter, the present disclosure will now be described more fully with reference to the accompanying drawings, in which exemplary embodiments of the present disclosure are shown such that one of ordinary skill in the art may easily work the present disclosure. The disclosure may, however, be embodied in many different forms and should not be construed as being limited to the embodiments set forth herein.

Hereinafter, embodiments of the present disclosure will be described in detail with reference to the drawings.

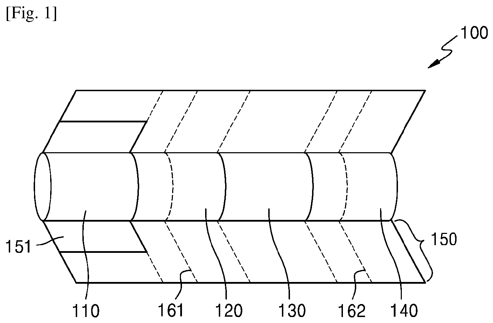

FIG. 1 is a schematic view of a structure of an aerosol generating article 100 according to an embodiment.

Referring to FIG. 1, the aerosol generating article 100 may include a first portion 110, a second portion 120, a third portion 130, and a fourth portion 140. In detail, the first portion 110, the second portion 120, the third portion 130, and the fourth portion 140 may include an aerosol generating element, a cooling element, a tobacco element, and a filter element, respectively. For example, the first portion 110 may include an aerosol generating material, the second portion 120 may cool the aerosol passing through the first portion 110, the third portion 130 may include a tobacco material and a moisturizer, and the fourth portion 140 may include a filter material.

Referring to FIG. 1, the first portion 110, the second portion 120, the third portion 130, and the fourth portion 140 may be sequentially arranged in a longitudinal direction of the aerosol generating article 100. Here, the longitudinal direction of the aerosol generating article 100 may be a direction in which a length of the aerosol generating article 100 extends. For example, the longitudinal direction of the aerosol generating article 100 may be a direction from the first portion 110 toward the fourth portion 140. Accordingly, the aerosol generated from at least one of the first portion 110 and the second portion 120 may sequentially pass through the third portion 130 and the fourth portion 140, and a smoker may absorb the aerosol from the fourth portion 140.

In general, an aerosol generating element has a vaporization temperature of about 140 °C to about 250 °C, whereas nicotine included in the tobacco element has a vaporization temperature of about 50 °C to about 90 °C. That is, the aerosol generating element generally has a higher vaporization temperature than nicotine.

In most aerosol generating articles according to the related art, a portion including the aerosol generating element and a portion including the tobacco element are arranged adjacent to each other. In this case, when the aerosol generating element is heated to a high temperature by an aerosol generating device, the tobacco element arranged adjacent to the aerosol generating element may also be heated to an unnecessarily high temperature. Thus, too much nicotine is transferred from the tobacco element from an initial smoking phase, resulting in early exhaustion of the nicotine of the tobacco element. As a result, the amount of nicotine transfer is significantly reduced in a latter smoking phase, which makes it difficult to achieve uniform nicotine inhalation during the entire smoking time.

Here, the early stage of smoking, for example, a first half of the smoking time, may correspond to the "initial smoking phase," and the rest of the smoking time may correspond to the "latter smoking phase."

In the aerosol generating article according to an embodiment, the second portion 120 including the cooling element is arranged between the first portion 110 including the aerosol generating element and the third portion 130 including the tobacco element. Accordingly, the high-temperature aerosol generated in the first portion 110 is cooled by the cooling element of the second portion 120 and then passes through the third portion 130. The tobacco element of the third portion 130 is heated by the aerosol having a relatively low temperature, and thus uniform nicotine inhalation during the entire smoking time may be realized.

As will be described below, the first portion 110 of the aerosol generating article 100 may be directly heated by a heater of an aerosol generating device, and the third portion 130 may not be directly heated. For example, when the aerosol generating article 100 is inserted in the aerosol generating device, the first portion 110 may be surrounded by the heater, and the third portion 130 may not be surrounded by the heater. Here, the heater may be arranged to surround at least a portion of an accommodation space in which the aerosol generating article 100 is accommodated. The tobacco element included in the third portion 130 may be heated by the high-temperature aerosol generated in the first portion 110 and passing through the third portion 130. Because the third portion 130 is not directly heated by the heater, compared to a case in which the third portion 130 is directly heated by the heater (i.e., at least a portion of the third portion 130 is surrounded by the heater), a temperature deviation occurring in the third portion 130 may be reduced. Thus, the amount of inhaled nicotine may be uniformly maintained during the entire smoking time.

The first portion 110 may include the aerosol generating element. Also, the first portion 110 may contain other additives, such as a flavor agent, a wetting agent, and/or an organic acid, or may contain a flavored liquid, such as menthol or a moisturizer. Here, the aerosol generating element may include, for example, at least one of glycerin, propylene glycol, ethylene glycol, dipropylene glycol, diethylene glycol, triethylene glycol, tetraethylene glycol, and oleyl alcohol. However, the disclosure is not limited to the examples described above and may include any other types of aerosol generating elements well-known in the art.

The first portion 110 may include a crimped sheet in which the aerosol generating element is included (e.g., impregnated). Also, the other additives, such as the flavor agent, the wetting agent, and/or the organic acid, and the flavored liquid may be included in the crimped sheet.

The crimped sheet may include, for example, at least one of a paper, cellulose acetate, lyocell, and polylactic acid. For example, the crimped sheet may be a paper sheet that does not emit a smell even when heated to a high temperature. However, it is not limited thereto.

The first portion 110 may extend about 7 mm to about 20 mm from an end of the aerosol generating article 100. However, the first portion 110 is not necessarily limited to this numerical range, and the length of the first potion 110 may be appropriately adjusted according to embodiments.

The second portion 120 may cool a current (i.e., aerosol) passing through the first portion 110. The second portion 120 may be formed of a polymer material or a biodegradable polymer material, and may have a cooling function. For example, the second portion 120 may be formed of polylactic acid (PLA) fibers, but is not limited thereto. Alternatively, the second portion 120 may be formed of a cellulose acetate filter having a plurality of holes. However, the second portion 120 is not limited to the examples described above and may include any materials which may cool the aerosol. For example, the second portion 120 may include a tube filter or a paper pipe including a cavity.

The second portion 120 may include a tube-type structure including a cavity, and an inner surface of the cavity may be coated with PLA and/or a flavor material.

The PLA may be coated on the inner surface of the second portion 120 and may effectively cool the aerosol through phase transition. For example, the PLA may perform phase transition, such as melt or glass transition, by absorbing heat energy. The heat energy of the aerosol passing through the inner surface of the cavity may be used for the phase transition of the PLA, and thus the temperature of the aerosol may be effectively reduced.

The flavor material may be coated on the inner surface of the cavity, and may add a flavor to the aerosol passing through the inner surface of the cavity. The flavor material may refer to a material for adding a specific flavor. For example, the flavor material may include vegetable spices, such as cinnamon, sage, herb, chamomile, winter hay, lavender, bergamot, a lemon, an orange, jasmine, ginger, vanilla, spearmint, peppermint, acacia, coffee, salary, sandalwood, cocoa, etc.

As another example, the flavor material may include animal spices, such as musk, ambergris, civet, castoreum, etc.

As another example, the flavor material may include an alcohol-based compound, such as menthol, geraniol, linalol, anethol, eugenol, etc. Also, the flavor material may include an aldehyde-based compound, such as vanillin, benzaldehyde, anisaldehyde, etc. Also, the flavor material may include an ester-based compound, such as isoamyl acetate, linalyl acetate, isoamyl propionate, linalyl butyrate, etc. Preferably, the flavor material may include menthol.

The second portion 120 may have a length of about 3 mm to about 30 mm in the longitudinal direction of the aerosol generating article 100. With the second portion 120 having the length of the numerical range described above, the aerosol generated in the first portion 110 may be cooled to a temperature appropriate for vaporizing nicotine from the tobacco element of the third portion 130. When the second portion 120 has a length that is less than about 3 mm, the aerosol may not be sufficiently cooled. On the other hand, when the second portion 120 has a length that is greater than about 30 mm, the aerosol may be excessively cooled and may not have a sufficiently high temperature for vaporizing nicotine. In order to realize uniform nicotine inhalation during the entire smoking time. Thus, preferably, the second portion 120 may have a length of about 3 mm to about 20 mm, and more preferably, a length of about 3 mm to about 15 mm.

The third portion 130 may include the tobacco element. The tobacco element may include a certain type of tobacco material. For example, the tobacco element may be included in the form of pipe tobacco, tobacco particles, tobacco sheet, tobacco beads, tobacco granules, tobacco powder, or tobacco extract. Also, the tobacco material may include for example at least one type from among a tobacco leaf, lateral veins of tobacco leaves, a puff tobacco, a cut tobacco pipe, a tobacco sheet, and a reformulated tobacco.

The fourth portion 140 may include the filter material. For example, the fourth portion 140 may include a cellulose acetate filter. A shape of the fourth portion 140 is not particularly limited. For example, the fourth portion 140 may include a cylindrical-type rod or a tubular-type rod. Also, the fourth portion 140 may include a recess-type rod. When the fourth portion 140 includes a plurality of segments, at least one of the plurality of segments may be formed to have a different shape from the other segments.

The fourth portion 140 may be formed to generate a flavor. For example, a liquid flavor material may be injected into the fourth portion 140, or an additional fiber impregnated with a flavor material may be inserted into the fourth portion 140. For example, the additional fiber impregnated with the flavor material may be arranged parallel to the longitudinal direction of the aerosol generating article 100. The additional fiber impregnated with the flavor material may be formed by using a material, such as cellulose acetate, cotton, PLA, etc., but it is not limited thereto. Also, with respect to the additional fiber impregnated with the flavor material, the amount of impregnated flavor material may be controlled by adjusting a thickness of the fiber, the number of strands of the fiber, etc.

Also, the fourth portion 140 may include at least one capsule. For example, the capsule may include a flavor material, and when the capsule is broken, a flavor may be generated by flavor material. Also, the capsule may include an aerosol generating material, and when the capsule is broken, an aerosol may be generated from the aerosol generating material. The capsule may have a structure in which the aerosol generating material is wrapped by a thin film. The capsule may have a spherical or a cylindrical shape, but is not limited thereto.

The aerosol generating article 100 may include a wrapper 150 surrounding at least a portion of the first portion 110 through fourth portion 140. Also, the aerosol generating article 100 may include the wrapper 150 surrounding the entirety of the first through fourth portions 110 through 140. The wrapper 150 may be an outermost layer of the aerosol generating article 100, and the wrapper 150 may be a single wrapper or a combination of a plurality of wrappers.

For example, the aerosol generating article 100 may further include a thermally conductive wrapper 151 surrounding at least a portion of the first portion 110. Here, the thermally conductive wrapper 151 may include a material having excellent thermal conductivity, such as metal, etc. The thermally conductive wrapper 151 may be arranged at a location corresponding to a heater of an aerosol generating device described below and may include a paramagnetic material (for example, aluminum, platinum, rutinum, etc.) which does not function as a susceptor that is heated by induction heating. The thermally conductive wrapper 151 may surround at least a portion of the first portion 110 such that it is directly heated by the aerosol generating device. The thermally conductive wrapper 151 may effectively transmit the heat of the heater throughout the entire first portion 110 with its high thermal conductivity.

The wrapper 150 may include at least one perforation through which external air may be introduced into the aerosol generating article or internal air may be discharged to the outside. For example, the wrapper 150 may surround at least a portion of the second portion 120 and may include at least one first perforation 161 formed at a location corresponding to the second portion 120. External air introduced through the at least one first perforation 161 may effectively cool the aerosol.

Also, the wrapper 150 may at least partially surround the fourth portion 140 and may include at least one second perforation 162 formed at a location to correspond to the fourth portion 140. External air introduced through the at least one second perforation 162 may cool and dilute the aerosol provided to a smoker.

### Embodiment 1. Manufacturing of Aerosol Generating Article

An aerosol generating article is manufactured to include a first portion, a second portion, a third portion, and a fourth portion that are sequentially arranged in a longitudinal direction. The first portion includes a crimped sheet containing an aerosol generating material, and the second portion includes a tube including a material capable of cooling the generated aerosol. The third portion includes a tobacco sheet as a tobacco material and glycerin as a moisturizer, and the fourth portion includes cellulose acetate fibers.

### Comparative Example 1. Manufacturing of Aerosol Generating Article

An aerosol generating article is manufactured to include a tobacco rod and a filter rod that are sequentially arranged in a longitudinal direction. The tobacco rod includes a tobacco pipe including a tobacco sheet cut into small sizes, and the filter rod includes a cellulose acetate filter.

### Comparative Example 2. Manufacturing of Aerosol Generating Article

An aerosol generating article is manufactured to include a front-end plug, a tobacco rod, and a filter rod that are sequentially arranged in a longitudinal direction. The front-end plug is formed by using cellulose acetate tow. The tobacco rod and the filter rod are formed by using the same method as the Comparative Example 1.

### Comparative Example 3. Manufacturing of Aerosol Generating Article

An aerosol generating article is manufactured by using the same method as the Embodiment 1, except that the positions of the second portion and the third portion of the Embodiment 1 are switched. That is, the aerosol generating article is manufactured to include the first portion, the third portion, the second portion, and the fourth portion of the Embodiment 1 that are sequentially arranged in a longitudinal direction.

### Experimental Embodiment 1 Analysis of the Amount of inhaled (i.e., transferred) nicotine according to the number of puffs

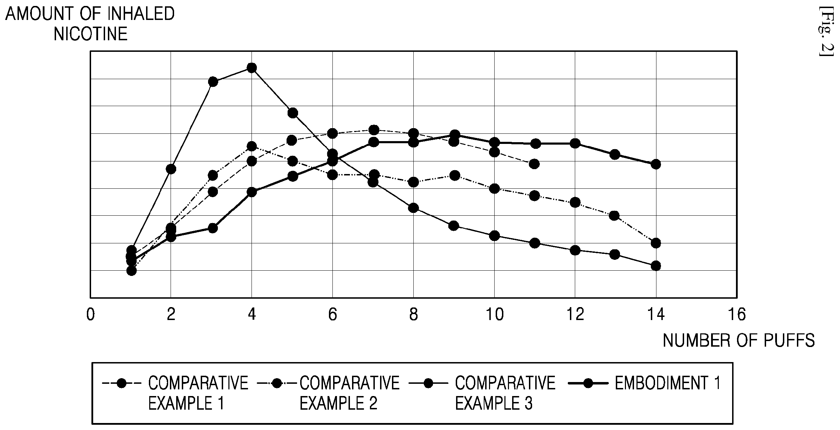

The amount of inhaled nicotine according to the number of puffs is analyzed by using the aerosol generating articles according to the Embodiment 1 and the Comparative Examples 1 through 3. Specifically, the aerosol generating articles according to the Embodiment 1 and the Comparative Examples 1 through 3 are heated, and puffs started after the aerosol generating articles are sufficiently heated. The amount of inhaled nicotine is measured for each puff, and the amount of inhaled nicotine is measured for 14 puffs. The results are shown in FIG. 2.

FIG. 2 is a graph showing the amount of inhaled nicotine per each puff as smoking progresses using aerosol generating articles according to an embodiment and comparative examples

As illustrated in FIG. 2, with respect to the aerosol generating article of the Comparative Example 1, nicotine is inhaled until the eleventh puff, and nicotine inhalation thereafter is not detected. Also, with respect to the aerosol generating articles of the Comparative Example 2 and the Comparative Example 3, most of nicotine is inhaled during the second through sixth puffs, and the amount of inhaled nicotine significantly reduced thereafter.

On the other hand, in the case of the aerosol generating article according to the Embodiment 1, unlike the aerosol generating articles of the Comparative Examples 1 through 3, relatively uniform amount of inhaled nicotine is maintained during the total 14 times of puffs.

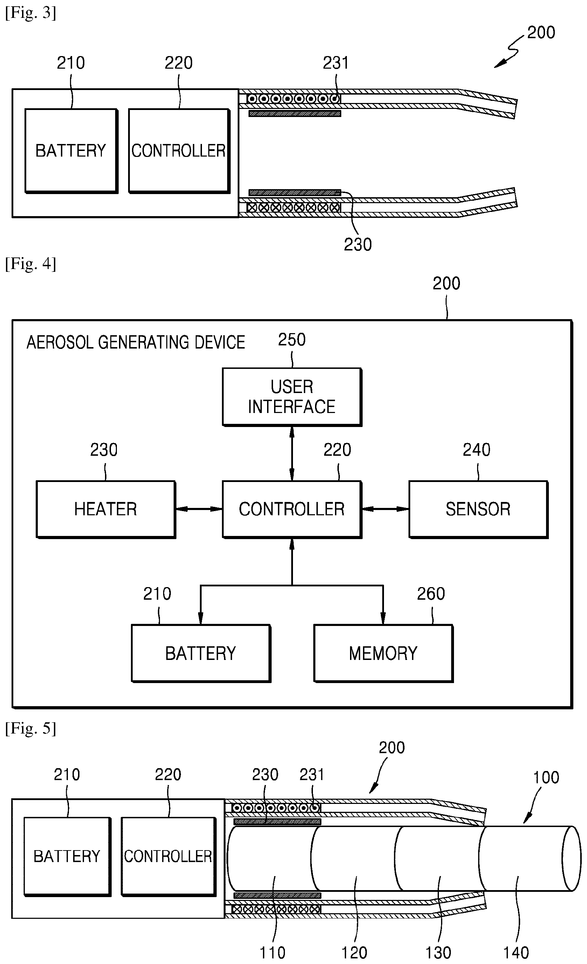

FIG. 3 is a view illustrating elements of an aerosol generating device according to an embodiment.

Referring to FIG. 3, an aerosol generating device 200 may include a heater 230, a coil 231, a battery 210, and a controller 220. However, it is not limited thereto, and the aerosol generating device 200 may further include other general-purpose components in addition to the components illustrated in FIG. 3.

The aerosol generating device 200 may generate an aerosol by heating an aerosol generating article accommodated in the aerosol generating device 200, by an induction heating method. The induction heating method may refer to a method of causing a magnetic substance to emit heat by applying, to the magnetic substance, an alternating magnetic field that changes a direction periodically.

When the alternating magnetic field is applied to the magnetic substance by the coil 231, energy loss may occur in the magnetic substance, according to eddy current loss and hysteresis loss, and the lost energy may be emitted from the magnetic substance as thermal energy. As the amplitude or frequency of the alternating magnetic field applied to the magnetic substance increases, the thermal energy emitted from the magnetic substance may increase as well. The thermal energy released from the magnetic substance may heat the aerosol generating article.

The magnetic substance emitting heat via an external magnetic field may be a susceptor. The susceptor included in the aerosol generating device 200 may have a form of pieces or a strip of the magnetic substance. For example, at least a portion of the heater 230 arranged in the aerosol generating device 200 may include a susceptor material.

At least a portion of the susceptor material may include a ferromagnetic substance. For example, the susceptor material may include metal or carbon. The susceptor material may include at least one of a ferrite, a ferromagnetic alloy, stainless steel, and aluminum. Also, the susceptor material may include a ceramic material (e.g., graphite, molybdenum, silicon carbide, niobium, a nickel alloy, a metal film, zirconia, etc.), a transition metal (e.g., nickel, cobalt, etc.), or a metalloid (i.e., boron or phosphorous).

The aerosol generating device 200 may accommodate the aerosol generating article. The aerosol generating device 200 may include a space for accommodating the aerosol generating article. The heater 230 may be arranged in the space for accommodating the aerosol generating article. For example, the heater 230 may have a cylindrical accommodation space for accommodating the aerosol generating article. Thus, when the aerosol generating article is accommodated in the aerosol generating device 200, the aerosol generating article may be accommodated in the heater 230.

The heater 230 may surround at least a portion of an outer surface of the aerosol generating article accommodated in the aerosol generating device 200. For example, the heater 230 may surround a tobacco material included in the aerosol generating article. Accordingly, heat may be more efficiently delivered to the tobacco material from the heater 230.

The heater 230 may heat the aerosol generating article accommodated in the aerosol generating device 200. As described above, the heater 230 may heat the aerosol generating article by an induction heating method. The heater 230 may include a susceptor material emitting heat in response to an external magnetic field, and the aerosol generating device 200 may apply an alternating magnetic field to the heater 230.

The coil 231 may be provided in the aerosol generating device 200. The coil 231 may apply the alternating magnetic field to the heater 230. When power is supplied to the coil 231 from the aerosol generating device 200, a magnetic field may be formed in the coil 231. When an alternating current is applied to the coil 231, a direction of the magnetic field formed in the coil 231 may be continually changed. When the heater 230 is exposed to an alternating magnetic field in the coil 231, the heater 230 may emit heat, and the aerosol generating article accommodated in the accommodation space of the heater 230 may be heated.

The coil 231 may be wound along an outer surface of the heater 230. Also, the coil 231 may be wound along an inner surface of a housing of the aerosol generating device 200. The heater 230 may be located in an inner space of the wound coil 231. When power is supplied to the coil 231, the alternating magnetic field generated by the coil 231 may be applied to the heater 230.

The coil 231 may extend in a longitudinal direction of the aerosol generating device 200 to an appropriate length. For example, the coil 231 may have the same length as the heater 230 or may be extend longer than the heater 230.

The coil 231 may be arranged at a location appropriate for applying the alternating magnetic field to the heater 230. For example, the coil 231 may be arranged at the location corresponding to the heater 230 such that the alternating magnetic field of the coil 230 is efficiently applied to the heater 230.

When an amplitude or a frequency of the alternating magnetic field formed by the coil 231 is changed, the degree of heating of the aerosol generating article performed by the heater 230 may also be changed. The amplitude or the frequency of the magnetic field generated by the coil 231 may be changed according to the power applied to the coil 231, and thus the aerosol generating device 200 may adjust the power applied to the coil 230 to control the heating of the aerosol generating article. For example, the aerosol generating device 200 may control the amplitude and the frequency of an alternating current applied to the coil 231.

For example, the coil 231 may be realized as a solenoid. The coil 231 may be a solenoid wound along an inner surface of the housing of the aerosol generating device 200, and the heater 230 and the aerosol generating article may be located in an inner space of the solenoid. A material of the solenoid may be copper. However, it is not limited thereto, and any one of Ag, Au, Al, W, Zn, and Ni or an alloy including at least one thereof may be used as the material of the solenoid.

The battery 210 may supply power to the aerosol generating device 200. The battery 210 may supply power to the coil 231. The battery 210 may generate a direct current (DC) power, and may include a converter converting a direct current supplied to an alternating current in order to supply an alternating current to the coil 231.

Also, the battery 210 may supply a direct current to the aerosol generating device 200. The battery 210 may include a LiFePO4 battery, but is not limited thereto. For example, the battery may include a LiCoO2 battery, a lithum titanate battery, a LiPoly battery, etc.

The converter may include a low-pass filter performing filtering on the direct current and outputting an alternating current supplied to the coil 231. The converter may further include an amplifier for amplifying the direct current. For example, the converter may be realized as a low pass filter included in a load network of a class-D amplifier.

The controller 220 may control the power supplied to the coil 231. The controller 220 may control the battery 210 to adjust the power supplied to the coil 231. For example, the controller 220 may maintain a heating temperature of the aerosol generating article based on a temperature of the heater 230.

FIG. 4 is a block diagram of components of the aerosol generating device according to an embodiment.

Referring to FIG. 4, the aerosol generating device 200 may include the battery 210, the heater 230, a sensor 240, a user interface 250, a memory 260, and the controller 220. However, an internal structure of the aerosol generating device 200 is not limited to the structure illustrated in FIG. 3. According to a design of the aerosol generating device 200, it will be understood by one of ordinary skill in the art that some of the components illustrated in FIG. 3 may be omitted or other components may be added.

The battery 210 supplies power used by the aerosol generating device 200 to operate. In other words, the battery 210 may supply power so that the heater 230 may be heated. Also, the battery 210 may supply power required for operations of other components included in the aerosol generating device 200, such as the sensor 240, the user interface 250, the memory 260, and the controller 220. The battery 210 may be a rechargeable battery or a disposable battery.

The aerosol generating device 200 may include at least one sensor 240. A sensing result by the at least one sensor 240 is transmitted to the controller 220, and the controller 220 may, according to the sensing result, control the aerosol generating device 200 to perform various functions, such as controlling the operation of the heater, restricting smoking, detecting insertion of the aerosol generating article, and displaying a notification.

For example, the at least one sensor 240 may include a puff sensor. The puff sensor may detect a user's puff based on any one of a temperature change, an airflow change, a voltage change, and an air pressure change.

Also, the at least one sensor 240 may include a temperature sensor for measuring a temperature of the heater 230 (or the aerosol generating article). The aerosol generating device 200 may include a temperature sensor configured to measure the temperature of the heater 230. Alternatively, the aerosol generating device 200 may not include the additional temperature sensor, and instead the heater 230 may also serve as a temperature sensor. In an embodiment, in addition to the heater 230 capable of serving as the temperature sensor, another temperature sensor may further be included in the aerosol generating device 200.

The at least one sensor 240 may include a temperature sensor for measuring an ambient temperature of the aerosol generating device 200. The ambient temperature is a temperature outside the aerosol generating device 200. The ambient temperature may be the temperature of air into which the aerosol generated from the aerosol generating article in the aerosol generating device 200 is discharged. The temperature sensor may be arranged outside the housing to measure the ambient temperature or may be arranged on a path through which external air is introduced into the aerosol generating device 200. The temperature sensor may deliver information about the measured ambient temperature to the controller 220, and the controller 220 may determine a heating profile to heat the aerosol generating article based on the ambient temperature.

Also, the at least one sensor may include a humidity sensor. The humidity sensor may measure an ambient humidity of the aerosol generating device 200. The ambient humidity may be the humidity outside the aerosol generating device 200. The ambient humidity may be a humidity of air into which the aerosol generated from the aerosol generating article in the aerosol generating device 200 is discharged. The humidity sensor may be arranged outside the housing to measure the ambient humidity or may be arranged on a path through which external air is introduced. The humidity sensor may deliver information about the measured ambient humidity to the controller 220, and the controller 220 may determine a heating profile to heat the aerosol generating article based on the ambient humidity.

Also, the at least one sensor may include an inductive sensor. The inductive sensor may sense whether or not the aerosol generating article is inserted into the aerosol generating device 200. For example, the aerosol generating article may include a metal material, such as aluminum (Al), and the inductive sensor may sense a change of inductance generated due to the insertion of the aerosol generating article into the aerosol generating device 200. However, it is not limited thereto, and the inductive sensor may be replaced by other types of sensors, such as a light sensor, a temperature sensor, a resistance sensor, etc.

When the insertion of the aerosol generating article is sensed, the controller 220 may control the aerosol generating device 200 such that heating may be automatically started without an additional external input. For example, the controller 220 may control the battery 210 to supply power to the coil, when the insertion of the aerosol generating article is sensed. However, it is not necessarily limited thereto, and the controller 220 may control the aerosol generating device 200 to start heating only when there is an additional external input.

The user interface 250 may provide a user with information about a state of the aerosol generating device 200. The user interface 250 may include various interfacing devices, such as a display or a lamp for outputting visual information, a motor for outputting haptic information, a speaker for outputting sound information, input/output (I/O) interfacing devices (for example, a button or a touch screen) for receiving information input from the user or outputting information to the user, terminals for performing data communication or receiving charging power, and communication interfacing devices for performing wireless communication (for example, Wi-Fi, Wi-Fi direct, Bluetooth, near-field communication (NFC), etc.) with external devices.

However, the aerosol generating device 200 may be implemented by selecting only some of the above-described various interfacing devices 250.

The user interface 250 may include a display configured to output visual information related to the aerosol generating device 200. Here, the visual information related to the aerosol generating device 200 includes all types of information related to the operation of the aerosol generating device 200. For example, the display may output information about a state of the aerosol generating device 200 (for example, whether or not the aerosol generating device is available for use, etc.), information about the heater 230 (for example, starting pre-heating, processing pre-heating, completing pre-heating, etc.) information about the battery 210 (for example, a remaining capacity of the battery 210, the operability of the battery 210, etc.), information about a reset operation of the aerosol generating device 200 (for example, a reset period, a reset process, a reset completion, etc.), information about the cleaning of the aerosol generating device 200 (for example, a cleaning period, whether or not cleaning is needed, processing cleaning, completion of cleaning, etc.), information about charging of the aerosol generating device 200 (for example, whether or not charging is needed, processing charging, charging completion, etc.), information about a puff operation (for example, the number of puffs, a notice for a completion of the puff operation, etc.), information about the safety (for example, a use time due, etc.), or the like.

The communication interface may be connected with an external device, an external server, etc. for communication. For example, the communication interface may be realized as a type supporting at least one communication method from among various types of digital interfaces, AP-based WiFi (a wireless local area network (LAN)), Bluetooth, Zigbee, a wired/wireless LAN, a WAN, Ethernet, IEEE 1394, HDMI, USB, MHL, AES/EBU, optical communications, and coaxial communications. Also, the communication interface may include a transition minimized differential signaling (TMDS) channel for transmitting video and audio signals, a display data channel (DDC) for transmitting and receiving device information, video or audio-related information (for example, enhanced extended display identification data (E-EDID)), and consumer electronic control (CEC) for transmitting and receiving control signals. However, it is not limited thereto, and various interfaces may be implemented.

The memory 260 may be a hardware component configured to store various pieces of data processed in the aerosol generating device 200 and may store data processed or to be processed by the controller 220. The memory 260 may include various types of memories, such as random access memory, such as dynamic random access memory (DRAM), static random access memory (SRAM), etc., read-only memory (ROM), electrically erasable programmable read-only memory (EEPROM), etc.

The memory 260 may store data with respect to an operation time of the aerosol generating device 200, the maximum number of puff operations, the current number of puff operations, at least one temperature profile, a user's smoking pattern, etc.

The controller 220 may generally control the operations of the aerosol generating device 200. The controller 220 may include at least one processor. A processor may be implemented as an array of a plurality of logic gates or may be implemented as a combination of a general-purpose microprocessor and a memory in which a program executable in the microprocessor is stored. It will be understood by one of ordinary skill in the art that the processor may be implemented in other forms of hardware.

Although not illustrated in FIG. 4, the aerosol generating device 200 may be included in an aerosol generating system, together with an additional cradle. For example, the cradle may be used to charge the battery 210 of the aerosol generating device 200. For example, the aerosol generating device 200 may be supplied with power from a battery of the cradle and may charge the battery 210 of the aerosol generating device 200, while the aerosol generating device 200 is accommodated in an accommodation space of the cradle.

FIG. 5 is a diagram showing the aerosol generating device illustrated in FIG. 3, into which the aerosol generating article illustrated in FIG. 1 is inserted.

Referring to FIG. 5, the aerosol generating device 200 may include an accommodation space for accommodating the aerosol generating article 100, the heater 230 for heating the aerosol generating article 100, and the battery 210 for supplying power to the heater 230.

The heater 230 of the aerosol generating device 200 may heat the first portion 110 of the aerosol generating article 100, and the aerosol generating element of the first portion 110 may generate an aerosol. The generated aerosol may pass through the second portion 120, may be cooled by the cooling element, and then may be introduced to the third portion 130. The aerosol introduced into the third portion 130 may heat the tobacco element and vaporize nicotine, such that the vaporized nicotine may be transferred together with the aerosol to the fourth portion 140. The aerosol and the nicotine passing through the filter element of the fourth portion 140 may be provided to a user.

The aerosol generating article 100 may be accommodated in the accommodation space of the aerosol generating device 200 and may be heated by the heater 230 arranged to surround the accommodation space and at least a portion of the first portion 110. That is, the first portion 110 of the aerosol generating article 100 may be directly heated by the heater 230 of the aerosol generating device 200, whereas the third portion 130 may be indirectly heated by the aerosol.

According to an aerosol generating article according to the related art, while it is required to heat an aerosol generating element and a tobacco element at different temperatures from each other for the aerosol and nicotine inhalation to be uniform during the entire smoking time. However, it is difficult to adjust the heating temperatures differently, because the aerosol generating element and the tobacco element are arranged to be adjacent to each other.

By contrast, according to the aerosol generating article 100 according to an embodiment, the first portion 110 and the third portion 130 are apart from each other, and thus it is easy to differently adjust the temperatures of the first portion 110 and the third portion 130. Also, the heater 230 of the aerosol generating device 200 may be arranged at a location corresponding to the first portion 110 of the aerosol generating article 100 to surround the first portion 110 such that only the first portion 110 is directly heated by the heater 230. The tobacco element included in the third portion 130 may be heated by the high-temperature aerosol generated in the first portion 110 and passing through the third portion 130.

Those of ordinary skill in the art related to the present embodiments may understand that various changes in form and details can be made therein without departing from the scope of the characteristics described above. Therefore, the disclosed methods should be considered in a descriptive point of view, not a restrictive point of view. The scope of the present disclosure is defined by the appended claims rather than by the foregoing description, and all differences within the scope of equivalents thereof should be construed as being included in the present disclosure.

**It follows a list of examples:**
[Example 1] An aerosol generating article comprising:
   a first portion including an aerosol generating element;
   a second portion including a cooling element;
   a third portion including a tobacco element; and
   a fourth portion including a filter element,
   wherein the first portion, the second portion, the third portion, and the fourth portion are sequentially arranged in a longitudinal direction of the aerosol generating article.
[Example 2] The aerosol generating article of example 1, wherein the first portion includes a crimped sheet, and the aerosol generating element is impregnated in the crimped sheet.
[Example 3] The aerosol generating article of example 1, wherein the second portion has a length of about 3 mm to about 30 mm in the longitudinal direction of the aerosol generating article.
[Example 4] The aerosol generating article of example 1, wherein the second portion includes a tubular-shaped structure including a cavity.
[Example 5] The aerosol generating article of example 1, wherein the second portion includes polylactic acid.
[Example 6] The aerosol generating article of example 1, wherein the fourth portion includes at least one capsule including at least one of a flavor material and an aerosol generating material.
[Example 7] The aerosol generating article of example 1, wherein the fourth portion includes fibers impregnated with a flavor material.
[Example 8] The aerosol generating article of example 1, further comprising a thermally conductive wrapper surrounding at least a portion of the first portion,
   wherein the thermally conductive wrapper includes a paramagnetic material.
[Example 9] The aerosol generating article of example 1, further comprising a wrapper surrounding at least a portion of the second portion and including at least one perforation formed at a location corresponding to the second portion.
[Example 10] The aerosol generating article of example 1, further comprising a wrapper surrounding at least a portion of the fourth portion and including at least one perforation formed at a location corresponding to the fourth portion.
[Example 11] An aerosol generating device comprising:
   an accommodation space for accommodating the aerosol generating article of example 1;
   a heater configured to heat the aerosol generating article; and
   a battery configured to supply power to the heater.
[Example 12] The aerosol generating device of example 11, wherein the heater surrounds the accommodation space and is further configured to heat at least a portion of the first portion.

## Claims

1. An aerosol generating article comprising:
a first portion including an aerosol generating element;
a second portion including a cooling element;
a third portion including nicotine; and
a fourth portion including a filter element,
wherein the first portion, the second portion, the third portion, and the fourth portion are sequentially arranged in a longitudinal direction of the aerosol generating article.

2. The aerosol generating article of claim 1, wherein the first portion includes a crimped sheet, and the aerosol generating element is impregnated in the crimped sheet.

3. The aerosol generating article of claim 1, wherein the second portion has a length of about 3 mm to about 30 mm in the longitudinal direction of the aerosol generating article.

4. The aerosol generating article of claim 1, wherein the second portion includes a tubular-shaped structure including a cavity.

5. The aerosol generating article of claim 1, wherein the second portion includes polylactic acid.

6. The aerosol generating article of claim 1, wherein the fourth portion includes at least one capsule including at least one of a flavor material and an aerosol generating material.

7. The aerosol generating article of claim 1, wherein the fourth portion includes fibers impregnated with a flavor material.

8. The aerosol generating article of claim 1, further comprising a thermally conductive wrapper surrounding at least a portion of the first portion,
wherein the thermally conductive wrapper includes a paramagnetic material.

9. The aerosol generating article of claim 1, further comprising a wrapper surrounding at least a portion of the second portion and including at least one perforation formed at a location corresponding to the second portion.

10. The aerosol generating article of claim 1, further comprising a wrapper surrounding at least a portion of the fourth portion and including at least one perforation formed at a location corresponding to the fourth portion.

11. An aerosol generating device comprising:
an accommodation space for accommodating the aerosol generating article of claim 1;
a heater configured to heat the aerosol generating article; and
a battery configured to supply power to the heater.

12. The aerosol generating device of claim 11, wherein the heater surrounds the accommodation space and is further configured to heat at least a portion of the first portion.
